# EUROPEAN PATENT APPLICATION

(11) **EP 3 242 125 A1**
(43) Date of publication of application: **08.11.2017**
(21) Application number: 17020114.9
(22) Date of filing: 28.03.2017
(51) Int. Cl.: G01N 21/94

(54) **OPTOMECHATRONIC METHOD FOR CONTINUOUS INSPECTION OF A ABRASIVE BLASTING QUALITY**

(30) Priority: 02.05.2016 PL 41707316
(71) Applicant: Politechnika Lodzka, 90-924 Lodz (PL)
(72) Inventor: Sawicki, Jacek, dr hab. inz., 93-479 Lodz (PL); Rzepkowski, Antoni, mgr inz., 94-128 Lodz (PL); Olbrycht, Robert, dr inz., 90-243 Lodz (PL); Byczkowska, Paulina, mgr inz., 91-464 Lodz (PL)

(57) **Abstract**

An optomechatronic method for continuous inspection of abrasive blasting quality wherein a fragment of abrasive-blasted surface is subjected in the course of the treatment to an impact of a beam of electromagnetic radiation whose wavelength or wavelength range is chosen from amongst the wavelengths or wavelength ranges previously selected experimentally, after reflection from the treated surface, the beam containing an image of treated surface topography is recorded and digitalized within a scale determined experimentally for digitalized beams reflected from surfaces whose degrees of treatment were as specified in standards, wherein the results of digitalization within a specified range of scale are communicated with the use of light, sound, light-and-sound or vibration signal related to that range of scale.

## Description

The invention relates to an optomechatronic method for continuous inspection of abrasive blasting quality, performed for the purpose of cleaning or preparing a surface for paint or varnish application processes.

The treatment consists in treating the surface being cleaned with a stream of abrasive material forcibly propelled against the surface with the use of compressed air, water or centrifugal force.

Relevant standards contain information and descriptions pertaining to surface preparation with the use of abrasive blasting.

The standards specify also the degree of cleanness of steel surfaces cleaned with the use of manual, manual and mechanical, and abrasive blasting methods most often used in industrial practice - the standards identify four degrees of steel substrate preparation before paint/varnish is applied. The preparation degrees are defined with a description of surface appearance after cleaning, and with photographic standard specimens typical of particular examples. According to the standards, surface preparation with the use of abrasive blasting is marked with "Sa" letters: Sa 1, Sa 2, Sa 2½, Sa 3, of which Sa 3 and Sa 2½ mean acceptable surface treatment, Sa 2 means insufficient surface treatment, and Sa 1 means a surface requiring re-treatment.

Substrate roughness after abrasive blasting is also determined in accordance with the relevant standards.

An important parameter of the abrasive blasting process is the type/condition/quality of surface profile achieved with abrasive blasting. It depends on the abrasive material, the air pressure and the cleaning technique used. Too smooth surface may result in insufficient paint coat adhesion, whereas too rough surface may lead to irregular coating of high sharp peaks. That leads to premature occurrence of coating flaws, particularly in the case of thin coatings, such as blast primers.

Patent No. US 3950642 describes a method for inspecting shot peened surfaces for extent of coverage. It discusses a method using fluorescent dyes and ultraviolet light.

The description of the patent application US 20110182499 A1 discloses a method for determining the surface coverage obtained by shot peening to ensure uniform strengthening of the surface by means of inspections carried out after the SP process. The method consists in digitalization of shot-peened surface topography by an optical digital recording unit, and then in preparation of a three-dimensional height (roughness) profile with the use of computer software, after which the "results" are filtered by software using mathematical methods for the purpose of determining deviations from the zero value of the profile.

The previously conducted inspections consisted in evaluation of abrasive-blasted surface quality.

The optomechatronic method for continuous inspection of abrasive blasting quality with the use of treated surface topography digitalization **that constitutes the subject matter of the invention** consists in subjecting, in the course of treatment, a fragment of abrasive-blasted surface to the impact of a beam of electromagnetic radiation whose wavelength or wavelength range is chosen from amongst wavelengths or wavelength ranges previously selected experimentally in relation to treatment conditions, such as type of abrasive medium type, degree of dustiness, processing temperature, humidity, or type of workpiece, after reflection from the surface being treated, the beam containing an image of the treated surface topography is recorded and digitalized within a scale determined experimentally for digitalized beams reflected from surfaces whose degrees of treatment were as specified in relevant standards, wherein the results of digitalization falling within a specific range of the scale are communicated with the use of light, sound, light-and-sound or vibration signal related to that range of the scale.

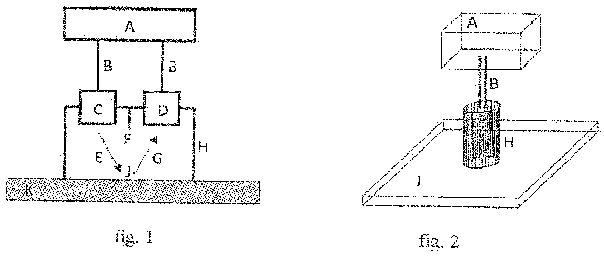

The method that constitutes the subject matter of the invention is illustrated with the following examples referring to the included Figures, of which Fig. 1 shows a diagram of an assembly with a probe for inspecting treatment quality, and Fig. 2 shows a diagram of a workstation for inspecting treatment quality with the use of the said probe.

### Example 1.

Continuous inspection of abrasive blasting quality was performed in the course of cleaning S235 steel specimens with the use of a shot peening nozzle and cut wire shot. The shot peening nozzle was equipped with a probe H comprising a housing with a built-in source C of infrared radiation (selected experimentally based on the type of blasting medium, dustiness, processing temperature, humidity, type of workpiece) and a sensor D for measuring the intensity of reflected radiation, separated with partition F. The inside of probe H was coated with a black matt layer. The source C of radiation and the sensor D of the probe H were connected by wires B to the measuring unit A responsible for analyzing and digitalizing signals from the sensor D and for showing a value correlated with the condition of surface J on the digital display of the said measuring unit.

Before the actual inspection was commenced, four various standard specimens of S235 steel were made with the degrees of cleanness obtained with cut wire shot peening of 25%, 50%, 75% and 100%, respectively. Then, in the conditions in which the inspected specimen was to be treated (dustiness, temperature, humidity), the probe H was placed on the surface J of each of the standard specimens and the standard specimen surface was illuminated with a beam E of infrared radiation from the source C, whereas the sensor D measured the intensity of the radiation beam G reflected and dispersed by the inspected surface J of the specimen, which was the picture of the treated surface topography. The signal from the sensor D was sent to the measuring unit A, where it was digitalized and classified as matching the relevant range of the 1-10 scale, as a function of the degree of cleanness of the surface J, and the digital result of classification was shown on the digital display, whereas the results
- 8.1-10 - meant an acceptable surface treatment, which was S 3 level according to the standard,
- 6.1-8 - meant an acceptable surface treatment, which was S 2½ level according to the standard,
- 3.1-6 - meant an insufficient surface treatment, which was S 2 level according to the standard,
- 1-3 - meant surface requiring re-treatment, which was S 1 level according to the standard.

After signals from the sensor D were recorded for all the standard specimens, abrasive blasting of the inspected S235 steel specimen was commenced. During the blasting, the quality of treatment was inspected with the probe H. The procedure was identical with the one followed for the standard specimens, and the digital result of treatment quality inspection was displayed on the measuring unit A display.

### Example 2.

S235 steel specimens were cleaned with cut wire shot directed toward the specimens with the use of a nozzle equipped with a reflective optocoupler being an infrared radiation sending and receiving element, and with a closing contact sensor with a magnetic holdfast, connected to the measuring unit A for analyzing and digitalizing signals from the optocoupler, and for signaling the value correlated with a given surface condition with the use of colored LEDs and a sound alarm, with which the measuring unit A was equipped.

The measuring system calibration process was carried out as described in Example 1, using the reflective optocoupler instead of the probe H. The signal from the optocoupler was sent to the measuring unit A, where it was digitalized and classified as matching the relevant range of the 1 - 10 scale, as a function of the degree of treatment of the surface J, and the result was signaled by means of illuminating LEDs and possibly activating the sound alarm, whereas
- three green LEDs - meant an acceptable surface treatment, which was S 3 level according to the standard,
- two green LEDs and one red LED - meant an acceptable surface treatment, which was S 2½ level according to the standard,
- two red LEDs, one green LED and an intermittent sound signal - meant an insufficient surface treatment, which was S 2 level according to the standard,
- three red LEDs and a continuous sound signal - meant surface requiring re-treatment, which was S 1 level according to the standard.

After signals from the reflective optocoupler were recorded for all the standard specimens, abrasive blasting of the inspected S235 steel specimen was commenced, in the course of which the quality of treatment was inspected with the use of the optocoupler, and the digital result of treatment quality inspection was signaled in the measuring unit A by means of illuminating the relevant LEDs and activating sound alarms.

## Claims

1. An optomechatronic method for continuous inspection of abrasive blasting quality with the use of treated surface topography digitalization, **characterized in that** a fragment of abrasive-blasted surface is subjected in the course of the treatment to an impact of a beam of electromagnetic radiation whose wavelength or wavelength range is chosen from amongst the wavelengths or wavelength ranges previously selected experimentally in relation to treatment conditions, such as abrasive medium type, degree of dustiness, processing temperature, humidity, type of workpiece, after reflection from the surface, the beam containing an image of treated surface topography is recorded and digitalized within a scale determined experimentally for digitalized beams reflected from surfaces whose degrees of treatment were as specified in standards wherein the results of digitalization falling within a specified range of scale are communicated with the use of light, sound, light-and-sound or vibration signal related to that range of scale.
